# EUROPEAN PATENT APPLICATION

(11) **EP 1 333 076 A1**
(43) Date of publication of application: **06.08.2003**
(21) Application number: 01972488.9
(22) Date of filing: 26.09.2001
(51) Int. Cl.: C09D 163/04, C09D 161/06, C09D 133/02, C09D 5/02

(54) **WATER-BASED COATING COMPOSITION FOR CAN INNER SURFACES**

(30) Priority: 20.10.2000 JP 2000321651; 27.11.2000 JP 2000359990
(71) Applicant: KANSAI PAINT CO., LIMITED, Amagasaki-shi Hyogo 661-0964 (JP)
(72) Inventor: HIROSE, Yuji, Hiratsuka-shi, Kanagawa 254-0016 (JP); NISHIDA, Reiziro, Chigasaki-shi, Kanagawa 253-0082 (JP); INOMATA, Keiji, Hiratsuka-shi, Kanagawa 254-0071 (JP); YOKOI, Hideo, Hiratsuka-shi, Kanagawa 254-0017 (JP); HARADA, Shingo, Hiratsuka-shi, Kanagawa 254-0073 (JP)
(74) Representative: Hucker, Charlotte Jane
(86) International application number: JP0108347
(87) International publication number: WO02034847

(57) **Abstract**

The present invention provides an aqueous coating composition for the inner surface of a can, comprising a carboxyl-containing, acrylic-modified epoxy resin (C) prepared by reacting a high-molecular-weight epoxy resin (A) that has a number average molecular weight of 3,000 to 30,000 and is a reaction product of a specific low-molecular-weight cresol novolac epoxy resin (a) and a specific low-molecular-weight cresol novolac phenol resin (b), with a carboxyl-containing acrylic resin (B); the carboxyl-containing, acrylic-modified epoxy resin (C) being neutralized and dispersed in an aqueous medium.

The aqueous coating composition of the present invention has good application workability and good film performance, and is free from environmental hormone problems caused by bisphenol A.

## Description

### TECHNICAL FIELD

The present invention relates to an aqueous coating composition for the inner surface of a can, and more specifically, a novel aqueous coating composition for the inner surface of a can, which does not cause problems of environmental hormones.

### BACKGROUND OF THE INVENTION

In order to solve the problems of global environmental pollution caused by the vaporization of organic solvents, aqueous coating compositions have been replacing organic solvent-based coating compositions in the field of coating materials for the inner surfaces of cans, such as a food can. Japanese Examined Patent Publication No. 1988-41934 and Japanese Unexamined Patent Publication No. 1995-138523 propose, as aqueous coating compositions, acrylic-modified epoxy resin-based aqueous coating compositions obtained by reacting or mixing an epoxy resin with a carboxyl-containing acrylic resin.

Generally, however, these aqueous coating compositions heretofore proposed comprise, as the starting material epoxy resin, a high-molecular-weight epoxy resin obtained by reacting a low-molecular-weight bisphenol A epoxy resin with bisphenol A, in order to accomplish good application workability and good film performance. Thus, bisphenol A, a known environmental hormone, partially remains unreacted in the coating composition.

Further, the use of an epoxy resin other than bisphenol A epoxy resins, such as an ordinary cresol novolac epoxy resin, as the starting material epoxy resin causes the following problems: When the epoxy resin has a low molecular weight, the resulting aqueous coating composition has insufficient film performance. On the other hand, when the epoxy resin has a high molecular weight, the resin is liable to gel upon reaction with an acrylic resin because of its high epoxy group content per molecule.

Therefore, it has been difficult to obtain an acrylic-modified epoxy resin-based aqueous coating composition that is free of bisphenol A leaching and has satisfactory film performance for coating the inner surfaces of cans.

### DISCLOSURE OF THE INVENTION

An object of the present invention is to provide an aqueous coating composition for the inner surface of a can, the composition having good application workability and good film performance and being free of the environmental hormone problems caused by bisphenol A.

Other objects and features of the invention will become apparent from the following description.

The present invention provides the following novel aqueous coating compositions for the inner surface of a can.
1. An aqueous coating composition for the inner surface of a can, comprising a carboxyl-containing, acrylic-modified epoxy resin (C) obtainable by reacting a high-molecular-weight epoxy resin (A) that has a number average molecular weight of 3,000 to 30,000 and is a reaction product of a low-molecular-weight cresol novolac epoxy resin (a) comprising 70 wt.% or more of the compound of formula (1) and a low-molecular-weight cresol novolac phenol resin (b) comprising 75 wt.% or more of the compound of formula (2), with a carboxyl-containing acrylic resin (B); the carboxyl-containing, acrylic-modified epoxy resin (C) being neutralized and dispersed in an aqueous medium. 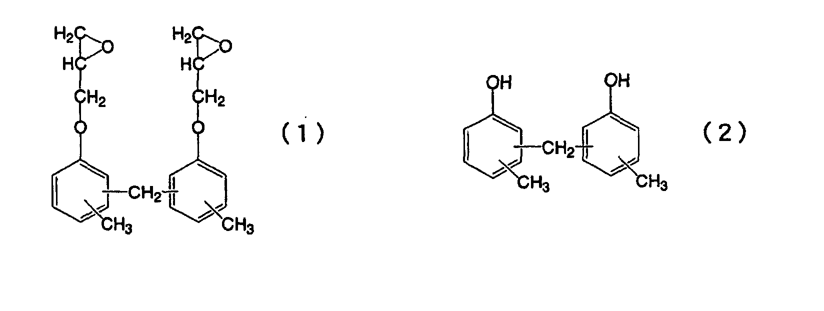
2. The aqueous coating composition according to item 1, wherein the compound of formula (1) comprises 70 wt.% or more of the compound of formula (3), and the compound of formula (2) comprises 70 wt.% or more of the compound of formula (4). 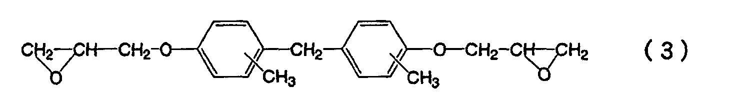 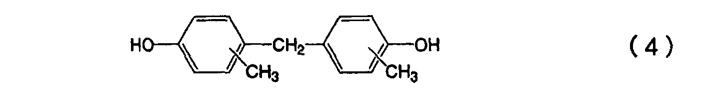
3. The aqueous coating composition according to item 1 or 2, wherein the low-molecular-weight cresol novolac epoxy resin (a) is a low-molecular-weight orthocresol novolac epoxy resin, and the low-molecular-weight cresol novolac phenol resin (b) is a low-molecular-weight orthocresol novolac phenol resin.
4. The aqueous coating composition according to any one of items 1 to 3, wherein the carboxyl-containing acrylic resin (B) has an acid value of 100 to 500 mg KOH/g.
5. The aqueous coating composition according to any one of items 1 to 4, wherein the carboxyl-containing, acrylic-modified epoxy resin (C) is obtained by reacting the high-molecular-weight epoxy resin (A) with the carboxyl-containing acrylic resin (B) at an (A)/(B) weight ratio of 60/40 to 90/10 on a solids basis.
6. The aqueous coating composition according to any one of items 1 to 5, wherein the carboxyl-containing, acrylic-modified epoxy resin (C) has an acid value of 15 to 200 mg KOH/g.
7. The aqueous coating composition according to any one of items 1 to 6, further comprising 20 parts by weight or less of a resol phenol resin crosslinking agent per 100 parts by weight of the carboxyl-containing, acrylic-modified epoxy resin (C).

The present inventors carried out intensive research to develop an aqueous coating composition for the inner surface of a can, which is free of environmental hormone problems caused by bisphenol A. The inventors found that an aqueous coating composition obtainable by neutralizing and dispersing a carboxyl-containing, acrylic-modified epoxy resin (C) prepared by reacting the specific high-molecular-weight epoxy resin (A) with the carboxyl-containing acrylic resin (B) does not contain bisphenol A and exhibits good application workability and good film performance. The present invention has been accomplished based on these new findings.

### High-molecular-weight epoxy resin (A)

The high-molecular-weight epoxy resin (A) for use in the present invention is a reaction product of a low-molecular-weight cresol novolac epoxy resin (a) comprising 70 wt.% or more of the compound of formula (1) with a low-molecular-weight cresol novolac phenol resin (b) comprising 75% or more of the compound of formula (2), and has a number average molecular weight of 3,000 to 30,000. The high-molecular-weight epoxy resin (A) is not liable to gel upon reaction with the carboxyl-containing acrylic resin (B).

In contrast, generally available cresol-novolac epoxy resins have the structure of formula (5) wherein n is usually 3 to 6, and therefore contain a number of epoxy groups per molecule. Such epoxy resins are highly liable to gel upon reaction with a carboxyl-containing acrylic resin.

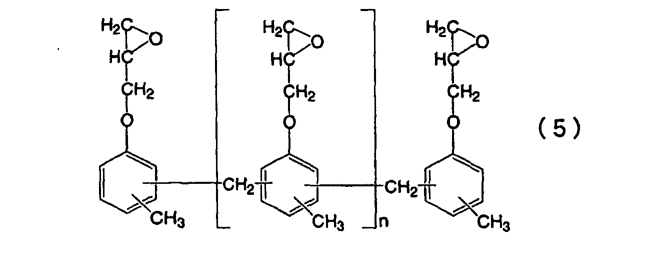

Ideally, the high-molecular-weight epoxy resin (A) is produced by a polyaddition reaction of the compound of formula (1), which has two epoxy groups and two benzene nuclei per molecule, i.e., the compound of formula (5) wherein n=0, with the compound of formula (2), which has two phenolic hydroxyl groups and two benzene nuclei per molecule, as shown in the following reaction scheme:

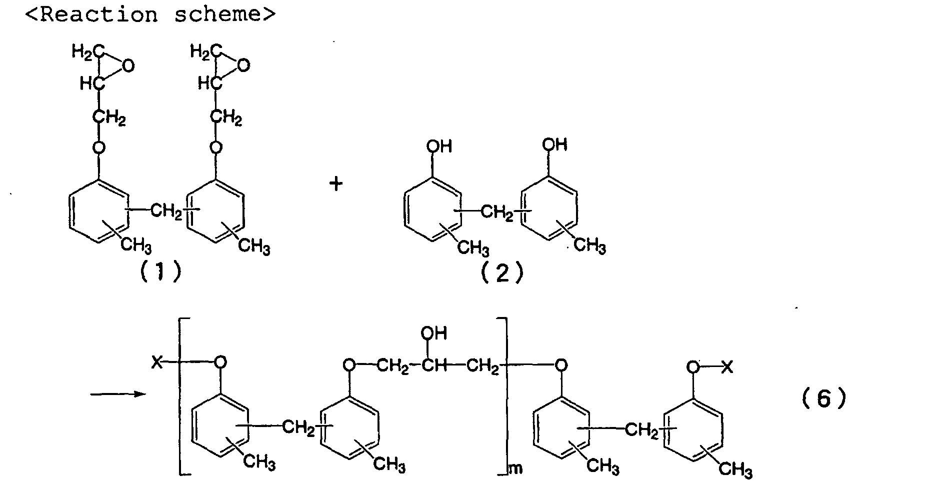

In the above reaction scheme, the high-molecular-weight epoxy resin (A) as the reaction product is represented by formula (6) in which the two Xs independently represent a hydrogen atom or a glycidyl group and m is an integer of 1 or more, preferably 8 to 50.

It is difficult to commercially obtain, at a low price, the starting material compounds of formulas (1) and (2) in pure form. Commercially available compounds contain components having one or at least three benzene nuclei.

Therefore, in practice, the high-molecular-weight epoxy resin (A) is produced by reacting a low-molecular-weight cresol novolac epoxy resin (a) comprising 70 wt.% or more, preferably 80 wt.% or more, of the binuclear compound of formula (1) with a low-molecular-weight cresol novolac phenol resin (b) comprising 75 wt.% or more, preferably 85 wt.% or more, of the binuclear compound of formula (2).

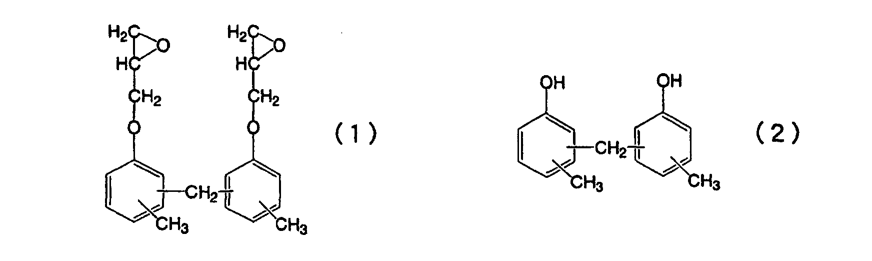

When the epoxy resin (a) or phenol resin (b) contains a large proportion of compounds having three or more benzene nuclei, gelation is likely to occur during the reaction of the high-molecular-weight epoxy resin (A) with the carboxyl-containing acrylic resin (B). On the other hand, when the resin (a) or (b) contains a large proportion of a compound having one benzene nucleus, the resulting high-molecular-weight epoxy resin (A) comprises a large proportion of a low-molecular-weight component, resulting in poor film performance with respect to hygiene, flavor retention, processability, corrosion resistance, etc., which are necessary for aqueous coating compositions for the inner surface of cans.

Further, it is suitable that the compound of formula (1) in the low-molecular-weight cresol novolac epoxy resin (a) comprise 70 wt.% or more, preferably 85 wt.% or more, of the 4,4'-substituted compound represented by formula (3), and that the compound of formula (2) in the low-molecular-weight cresol novolac phenol resin (b) comprise 70 wt.% or more, preferably 85 wt.% or more, of the 4,4'-substituted compound represented by formula (4), from the viewpoints of processability, corrosion resistance, and other film performance characteristics of the resulting composition.

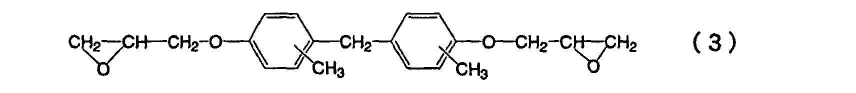

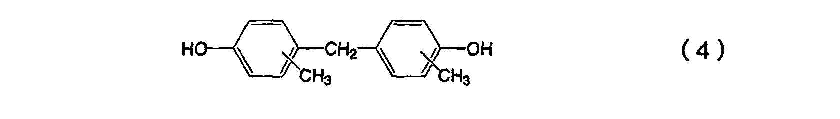

The positions of the methyl groups in the low-molecular-weight cresol novolac epoxy resin (a) and the low-molecular-weight cresol novolac phenol resin (b) are not limited. However, in view of the production stability and the like, it is preferable that both of the resins (a) and (b) are orthocresol resins having methyl groups in the ortho positions.

The reaction between the low-molecular-weight cresol novolac epoxy resin (a) and the low-molecular-weight cresol novolac phenol resin (b) can be carried out without using solvents, but is preferably performed in an organic solvent. The reaction temperature is preferably 120 to 200°C, more preferably 130 to 170°C. Any organic solvent can be used as long as it can dissolve or disperse the starting resins and does not severely inhibit the reaction. Examples include various organic solvents, such as hydrocarbon solvents, ketone solvents, ether solvents, and ester solvents.

When carrying out this reaction, the proportions of the components (a) and (b) are preferably such that 0.7 to 1.4 moles, more preferably 0.95 to 1.15 moles, of epoxy groups in the low-molecular-weight cresol novolac epoxy resin (a) are present per mole of phenolic hydroxyl groups in the low-molecular-weight cresol novolac phenol resin (b) .

One or more catalysts can be used in order to promote this reaction. Examples of useful catalysts include tetraethylammonium bromide, tetramethylammonium chloride, tetramethylammonium hydroxide, sodium hydroxide, sodium carbonate, tributylamine, dibutyltin oxide, and the like. These catalysts are preferably used in an amount of 10,000 ppm or less, relative to the combined amount of the low-molecular-weight cresol novolac epoxy resin (a) and the low-molecular-weight cresol novolac phenol resin (b).

It is suitable that the high-molecular-weight epoxy resin (A) have a number average molecular weight of 3,000 to 30,000, preferably 5,000 to 20,000, from the viewpoints of flavor retention, processability, corrosion resistance, and the like.

### Carboxyl-containing acrylic resin (B)

In the present invention, the carboxyl-containing acrylic resin (B) is reacted with the high-molecular-weight epoxy resin (A) to produce the carboxyl-containing, acrylic-modified epoxy resin (C). The resin (B) is an acrylic polymer containing a polymerizable unsaturated carboxylic acid, such as acrylic acid, methacrylic acid, itaconic acid, or fumaric acid, as an essential monomer component. Preferably, this polymer has a resin acid value of 100 to 500 mg KOH/g, from the viewpoints of stability in an aqueous medium and film performance characteristics, such as processability, corrosion resistance, and water resistance, of the resulting composition.

The carboxyl-containing acrylic resin (B) can be produced by polymerizing the polymerizable unsaturated carboxylic acid and other monomer component(s).

Examples of monomer components other than polymerizable unsaturated carboxylic acids include methyl (meth)acrylate, ethyl (meth)acrylate, propyl (meth)acrylate, n-butyl (meth)acrylate, i-butyl (meth)acrylate, t-butyl (meth)acrylate, 2-ethylhexyl (meth)acrylate, lauryl (meth)acrylate, benzyl (meth)acrylate, stearyl (meth)acrylate, cetyl (meth)acrylate, and other C₁₋₁₅ alkyl esters of acrylic or methacrylic acids; cyclohexyl (meth)acrylate, isobornyl (meth)acrylate, styrene, α-methylstyrene, vinyltoluene, and other hydrocarbon ring-containing polymerizable unsaturated monomers; 2-hydroxyethyl (meth)acrylate, hydroxypropyl (meth)acrylate, hydroxybutyl (meth)acrylate, hydroxyamyl (meth)acrylate, hydroxyhexyl (meth)acrylate, and other hydroxyalkyl (meth)acrylates, hydroxyl-containing, caprolactone-modified alkyl (meth)acrylate obtained by a ring-opening addition reaction of 1 to 5 moles of ε-caprolactone to 1 mole of the above hydroxyalkyl (meth)acrylate, and other hydroxyl-containing polymerizable unsaturated monomers; acrylamide, methacrylamide, N-methoxymethyl (meth)acrylamide, N-ethoxymethyl (meth)acrylamide, N-n-propoxymethyl (meth)acrylamide, N-isopropoxymethyl (meth)acrylamide, N-n-butoxymethyl (meth)acrylamide, N-sec-butoxymethyl (meth)acrylamide, N-tert-butoxymethyl (meth)acrylamide, and like acrylamide monomers; acrylonitrile, methacrylonitrile, vinyl acetate, ethylene, and butadiene; etc.

The carboxyl-containing acrylic resin (B) can be obtained by heating a mixture of the polymerizable unsaturated carboxylic acid and other monomer component(s), for example in an organic solvent, in the presence of a radical polymerization initiator or a chain transfer agent, at 80 to 150°C for about 1 to about 10 hours, to thereby effect copolymerization.

The radical polymerization initiator may be an organic peroxide initiator, an azo initiator, or the like. Examples of organic peroxide initiators include benzoyl peroxide, t-butylperoxy-2-ethylhexanoate, di-t-butylperoxide, t-butylperoxybenzoate, t-amylperoxy-2-ethylhexanoate, and the like. Examples of azo initiators include azobisisobutyronitrile, azobisdimethylvaleronitrile, and the like.

Examples of chain transfer agents include α-methylstyrene dimer, mercaptans, and the like.

### Carboxyl-containing, acrylic-modified epoxy resin (C)

The carboxyl-containing, acrylic-modified epoxy resin (C) is obtained by reacting the high-molecular-weight epoxy resin (A) with the carboxyl-containing acrylic resin (B).

The high-molecular-weight epoxy resin (A) is reacted with the carboxyl-containing acrylic resin (B) usually by heating in an organic solvent in the presence of, for example, a tertiary amine, such as triethylamine or dimethylethanolamine, at about 80 to about 120°C for about 0.5 to about 8 hours, whereby the carboxyl-containing, acrylic-modified epoxy resin (C) can be preferably produced. In the above process, the main reaction is hydroxy esterification, but other reactions, such as onium chloridation, also occurs.

The reaction ratio of the high-molecular-weight epoxy resin (A) to the carboxyl-containing acrylic resin (B) can be suitably selected according to desired application workability and film performance of the resulting composition. It is usually preferable that the weight ratio of (A)/(B) be 60/40 to 90/10, more preferably 70/30 to 90/10, on a solids basis.

It is desirable that the carboxyl-containing, acrylic-modified epoxy resin (C) thus obtained have an acid value of 15 to 200 mg KOH/g, from the viewpoints of dispersion stability in an aqueous medium and water resistance of the resulting film. Also, it is preferable that the resin (C) contain substantially no epoxy groups in view of storage stability.

### Aqueous coating composition for inner surface of can

The aqueous coating composition for the inner surface of a can of the present invention can be obtained by neutralizing and dispersing the carboxyl-containing, acrylic-modified epoxy resin (C) in an aqueous medium.

An amine or ammonia can be suitably used as a neutralizer. Examples of amines include triethylamine, triethanolamine, dimethylethanolamine, diethylethanolamine, morpholine, and the like, among which triethylamine and dimethylethanolamine are preferable.

The degree of neutralization of the carboxyl-containing, acrylic-modified epoxy resin (C) is not limited, but neutralization with 0.3 to 1.0 equivalent of the neutralizer per carboxyl group in the resin is preferable.

The aqueous medium in which the epoxy resin (C) is dispersed may be water alone, or a mixture of water and an organic solvent. Any known organic solvent can be used as long as it does not adversely affect the stability of the epoxy resin (C) in the aqueous medium and is miscible with water. In the aqueous coating composition of the present invention, the amount of the organic solvent is preferably 50 wt.% or less in the aqueous medium, from the environmental protection point of view.

Preferable organic solvents miscible with water are alcohol solvents, cellosolve solvents, carbitol solvents, and the like. Examples of these organic solvents include n-butanol and other alcohol solvents; ethylene glycol monomethyl ether, ethylene glycol monoisopropyl ether, ethylene glycol monobutyl ether, and other cellosolve solvents; diethylene glycol monoethyl ether and other carbitol solvents; propylene glycol monomethyl ether; etc. An inert organic solvent immiscible with water may be used in combination with the water-miscible organic solvent, within a range that does not adversely affect the stability of the epoxy resin (C) in the aqueous medium. Examples of such inert organic solvents include toluene, xylene, and other aromatic hydrocarbon solvents; ethyl acetate, butyl acetate, and other ester solvents; methyl ethyl ketone and other ketone solvents; etc.

The carboxyl-containing, acrylic-modified epoxy resin (C) can be neutralized and dispersed in an aqueous medium in a routine manner. For example, the epoxy resin (C) may be gradually added to an aqueous medium containing a neutralizer with stirring; or the epoxy resin (C) may be first neutralized with a neutralizer, followed by addition of an aqueous medium to the neutralization product with stirring, or addition of the neutralization product to an aqueous medium with stirring.

The aqueous coating composition of the present invention may contain a crosslinking agent, in addition to the epoxy resin (C). Examples of crosslinking agents include resol phenol resins, melamine resins, benzoguanamine resins, and the like, among which resol phenol resins are suitable.

Examples of phenol components in the resol phenol resin include o-cresol, p-cresol, p-tert-butylphenol, p-ethylphenol, 2,3-xylenol, 2,5-xylenol, p-tert-aminophenol, p-nonylphenol, p-cyclohexylphenol, and other bifunctional phenols; carbolic acid, m-cresol, methylphenol, 3,5-xylenol, m-methoxyphenol, and other trifunctional phenols; 2,4-xylenol, 2,6-xylenol, and other monofunctional phenols; etc. The resol phenol resin may contain one or more of these phenol components. A suitable amount of the resol phenol resin to be added is 20 parts by weight or less, preferably 2 to 10 parts by weight, per 100 parts by weight of the epoxy resin (C).

The aqueous coating composition of the present invention may further contain a surfactant, an antifoaming agent, or the like, as required.

The aqueous coating composition of the present invention preferably has a solids content of about 15 to about 40 wt.%.

The aqueous coating composition of the present invention can be suitably used for coating the inner surface of a can, such as a food can. The material of the can may be, for example, a metal plate or sheet, such as an aluminum plate or a steel plate; a plated steel plate or sheet obtained by plating the surface of a steel plate or sheet with zinc, chromium, tin, aluminium, or the like; or a treated steel plate or sheet obtained by chemical conversion of the surface of a steel plate or sheet with chromic acid, iron phosphate, or zinc phosphate. The composition can be applied to the surface of the metal material by a known process, such as roll coating, spray coating, brush coating, blow coating, or dipping electrodeposition. A cured film thickness of 2 to 30 µm is usually sufficient. The applied composition is usually baked at about 150 to about 280°C, preferably about 180 to about 220°C, for about 20 to about 600 seconds, preferably about 30 to about 300 seconds.

### BEST MODE FOR CARRYING OUT THE INVENTION

The following Production Examples, Examples, and Comparative Examples illustrate the invention in further detail. In the examples, all parts and percentages are by weight, unless otherwise indicated.

### Preparation of carboxyl-containing acrylic resin (B)

### Production Example 1

Ethylene glycol monobutyl ether (1,200 parts) was placed in a reaction vessel, and heated to and maintained at 100°C. To the reaction vessel, a mixed solution consisting of methacrylic acid (400 parts), styrene (500 parts), ethyl acrylate (100 parts), "Perbutyl O" (a peroxide polymerization initiator manufactured by NOF Corporation) (35 parts), and ethylene glycol monobutyl ether (140 parts) was added dropwise over 3 hours. After completion of the addition, the resulting mixture was aged at 100°C for 2 hours. Then, n-butanol (570 parts) was added, giving a carboxyl-containing acrylic resin solution (B1) with a solids content of 36%. The obtained resin had a number average molecular weight of about 7,000 and an acid value of 260 mg KOH/g.

### Preparation of high-molecular-weight epoxy resin (A)

### Production Example 2

Ethylene glycol (111 parts), orthocresol novolac epoxy resin (epoxy equivalent: 190, binuclear compound purity: 88%, 4,4'-substituted compound content: 35%) (640 parts), an orthocresol novolac phenol resin (molecular weight: 240, binuclear compound purity: 88%, 4,4'-substituted compound content: 35%) (360 parts), and a 50% aqueous tetramethylammonium chloride solution (1.2 parts) were placed in a reaction vessel, and heated to 140°C with stirring, and maintained at the temperature for 7 hours, giving a high-molecular-weight epoxy resin solution (A1) with a solids content of 90%. The obtained resin had an epoxy equivalent of about 2,900 and a number average molecular weight of about 6,000.

### Production Example 3

Cyclohexanone (111 parts), an orthocresol novolac epoxy resin (epoxy equivalent: 190, binuclear compound purity: 88%, 4,4'-substituted compound content: 95%) (628 parts), an orthocresol novolac phenol resin (molecular weight: 240, binuclear compound purity: 88%, 4,4'-substituted compound content: 95%) (372 parts), and a 50% aqueous tetramethylammonium chloride solution (1.2 parts) were placed in a reaction vessel, heated to 140°C with stirring, and maintained at the temperature for 7 hours, giving a high-molecular-weight epoxy resin solution (A2) with a solids content of 90%. The obtained resin had an epoxy equivalent of 6,000 and a number average molecular weight of 13,000.

### Production Example 4

Ethylene glycol (111 parts), an orthocresol novolac epoxy resin (epoxy equivalent: 190, binuclear compound purity: 88%, 4,4'-substituted compound content: 95%) (640 parts), an orthocresol novolac phenol resin (molecular weight: 240, binuclear compound purity: 88%, 4,4'-substituted compound content: 95%) (360 parts), and a 50% aqueous tetramethylammonium chloride solution (1.2 parts) were placed in a reaction vessel, heated to 140°C with stirring, and maintained at the temperature for 7 hours, giving a high-molecular-weight epoxy resin solution (A3) with a solids content of 90%. The obtained resin had an epoxy equivalent of 2,900 and a number average molecular weight of 7,500.

### Production Example 5

Ethylene glycol (111 parts), a paracresol novolac epoxy resin (epoxy equivalent: 188, binuclear compound purity: 95%) (640 parts), a paracresol novolac phenol resin (molecular weight: 238, binuclear compound purity: 95%) (360 parts), and a 50% aqueous tetramethylammonium chloride solution (1.2 parts) were placed in a reaction vessel, heated to 140°C with stirring, and maintained at the temperature for 7 hours, giving a high-molecular-weight epoxy resin solution (A4) with a solids content of 90%. The obtained resin had an epoxy equivalent of 2,800 and a number average molecular weight of 6,800.

### Preparation of aqueous coating composition

### Example 1

To the high-molecular-weight epoxy resin solution (A1) obtained in Production Example 2 (889 parts), the carboxyl-containing acrylic resin solution (B1) obtained by Production Example 1 (556 parts) and ethylene glycol monohexyl ether (40 parts) were added. After uniform mixing, dimethylethanolamine (66 parts) was added, and the resulting mixture was maintained at 90°C for 1 hour. Subsequently, deionized water (2,450 parts) was added dropwise over 1 hour, giving an aqueous coating composition for the inner surface of a can, which was an aqueous dispersion of a carboxyl-containing, acrylic-modified epoxy resin (C1). The coating composition had a solids content of 25%, a viscosity of 500 mPa·s, and a particle diameter of 200 nm. The epoxy resin (C1) had an acid value of 40 mg KOH/g.

### Example 2

To the high-molecular-weight epoxy resin solution (A2) obtained in Production Example 3 (944 parts), the carboxyl-containing acrylic resin solution (B1) obtained in Production Example 1 (417 parts) and methyl ethyl ketone (200 parts) were added. After uniform mixing, dimethylethanolamine (62 parts) was added, and the resulting mixture was maintained at 90°C for 3 hours. Subsequently, deionized water (2,340 parts) was added dropwise over 1 hour, and 1,140 parts of a mixture of water and the organic solvent was removed, giving an aqueous coating composition for the inner surface of a can, which was an aqueous dispersion of a carboxyl-containing, acrylic-modified epoxy resin (C2). The coating composition had a solids content of 35%, a viscosity of 4,000 mPa·s, and a particle diameter of 290 nm. The epoxy resin (C2) had an acid value of 30 mg KOH/g.

### Example 3

To the high-molecular-weight epoxy resin solution (A1) obtained in Production Example 2 (845 parts), a carboxyl-containing acrylic resin solution (B1) obtained in Production Example 1 (528 parts) and ethylene glycol monohexyl ether (38 parts) were added. After uniform mixing, dimethylethanolamine (63 parts) was added, and the resulting mixture was maintained at 90°C for 1 hour. Subsequently, 119 parts of "Hitanol 3305N" (manufactured by Hitachi Chemical Co., Ltd., a cresol/p-tert-butylphenol/formaldehyde phenol resin solution having a solids content of about 42%) was added, and the resulting mixture was maintained at 90°C for about 10 minutes. Subsequently, deionized water (2,407 parts) was added dropwise over 1 hour, giving an aqueous coating composition for the inner surface, which was an aqueous dispersion of a carboxyl-containing, acrylic-modified epoxy resin (C3). The coating composition had a solids content of 25%, a viscosity of 400 mPa·s, and a particle diameter of 200 nm. The epoxy resin (C3) had an acid value of 38 mg KOH/g.

### Example 4

To the high-molecular-weight epoxy resin solution (A3) obtained in Production Example 4 (845 parts), the carboxyl-containing acrylic resin solution (B1) obtained in Production Example 1 (528 parts) and ethylene glycol monohexyl ether (38 parts) were added. After uniform mixing, dimethylethanolamine (63 parts) was added, and the resulting mixture was maintained at 90°C for 1 hour. Then, "Hitanol 3305N" (119 parts) was added, and the resulting mixture was maintained at 90°C for about 10 minutes. Deionized water (2,407 parts) was added dropwise over 1 hour, giving an aqueous coating composition for the inner surface of a can, which was an aqueous dispersion of a carboxyl-containing, acrylic-modified epoxy resin (C4). The coating composition has a solids content of 25%, a viscosity of 600 mPa·s, and a particle diameter of 200 nm. The epoxy resin (C4) had an acid value of 38 mg KOH/g.

### Example 5

To the high-molecular-weight epoxy resin solution (A4) obtained in Production Example 5 (845 parts), the carboxyl-containing acrylic resin solution (B1) obtained in Production Example 1 (528 parts) and ethylene glycol monohexyl ether (38 parts) were added. After uniform mixing, dimethylethanolamine (63 parts) was added, and the resulting mixture was maintained at 90°C for 1 hour. Then, "Hitanol 3305N" (119 parts) was added, and the resulting mixture was maintained at 90°C for about 10 minutes. Deionized water (2,407 parts) was added dropwise over 1 hour, giving an aqueous coating composition for the inner surface of a can, which was an aqueous dispersion of a carboxyl-containing acrylic-modified epoxy resin (C5). The coating composition had a solids content of 25%, a viscosity of 300 mPa·s, and a particle diameter of 220 nm. The epoxy resin (C5) had an acid value of 39 mg KOH/g.

### Comparative Example 1

"Epikote 828EL" (a tradename of Yuka Shell Epoxy Co., Ltd., a bisphenol A epoxy resin having an epoxy equivalent of about 190 and a number average molecular weight of about 350) (1,000 parts), bisphenol A (556 parts), ethylene glycol monobutyl ether (172 parts), and a 50% aqueous tetramethylammonium solution (1.6 parts) were placed in a reaction vessel, heated to 140°C with stirring, and maintained at the temperature for 5 hours, giving an epoxy resin solution (E1) with a solids content of 90%. The obtained resin had an epoxy equivalent of 3,000 and a number average molecular weight of 8,000.

To the epoxy resin solution (E1) (1,000 parts), the carboxyl-containing acrylic resin solution (B1) obtained in Production Example 1 (630 parts) and ethylene glycol monobutyl ether (110 parts) were added. After uniform mixing, the temperature was lowered to 85°C, and deionized water (50 parts) and dimethylethanolamine (60 parts) were added. The resulting mixture was maintained at 85°C for 1 hour. Subsequently, deionized water (2,600 parts) was added dropwise over 1 hour, giving a comparative aqueous coating composition, which was an aqueous dispersion of a carboxyl-containing, acrylic-modified epoxy resin (C6). The coating composition had a solids content of 25%, a viscosity of 3,000 mPa·s, and a particle diameter of 180 nm. The epoxy resin (C6) had an acid value of 36 mg KOH/g.

### Comparative Example 2

"Epikote 828EL" (1,800 parts), bisphenol A (1,487 parts), diethylene glycol monobutyl ether (363 parts), and an 50% aqueous tetramethylammonium solution (1 part) were placed in a reaction vessel, heated to 140°C with stirring, and maintained at the temperature for 8 hours, giving an epoxy resin solution (E2) with a solids content of 90%. The obtained resin had an epoxy equivalent of 9,100 and a number average molecular weight of 5,500.

To the epoxy resin solution (E2) (1,000 parts), the carboxyl-containing acrylic resin solution (B1) obtained in Production Example 1 (630 parts) and ethylene glycol monobutyl ether (113 parts) were added. After uniform mixing, the temperature was lowered to 85°C, and deionized water (18 parts) and dimethylethanolamine (60 parts) were added. The resulting mixture was maintained at 85°C for 1 hour. Subsequently, deionized water (2,600 parts) was added dropwise over 1 hour, giving a comparative aqueous coating composition, which was an aqueous dispersion of a carboxyl-containing, acrylic-modified epoxy resin (C7). The coating composition had a solids content of 25%, a viscosity of 800 mPa·s, and a particle diameter of 350 nm. The epoxy resin (C7) had an acid value of 36 mg KOH/g.

### Performance test of aqueous coating composition

The aqueous coating compositions obtained in Examples 1 to 5 and Comparative Examples 1 and 2 were applied to 0.23 mm-thick, clean tin-free steel sheets by spray coating to a cured film thickness of 10 µm, and baked at 200°C for 3 minutes for curing. Using the coated sheets, film performance characteristics were tested by the methods described below. Further, the bisphenol-A concentration in each aqueous coating composition was measured.

### Test methods

Gel fraction: The cured film was subjected to solvent extraction in acetone under reflux for 6 hours, and the gel fraction was calculated as the percentage (%) of the weight of the film remaining after extraction to the weight of the film before extraction.

Substrate adhesion: A nylon film was sandwiched between two of the coated sheets (150 mm x 5 mm) so that the coated sides of the sheets were in contact with the nylon film. The coated sheets and nylon film were heated at 200°C for 60 seconds and then pressurized at 200°C for 30 seconds, to fuse the nylon film to the coating films, and used as a test piece. The T-peel adhesive strength of this test piece was measured using a tensile tester ("Autograph AGS-500A", a tradename of Shimadzu Corporation) at 20°C and a pulling speed of 200 mm/min.

Processability: The coated sheet was cut into a size of 40 mm x 50 mm, and folded in two with the coated side out. A 3 kg weight was dropped from a height of 42 cm onto the folded part. Then, a 20 mm-long portion from the folded part was dipped in a 1% aqueous sodium chloride solution, and the current value when a voltage of 6.5 V was applied to it for 6 seconds was measured. The smaller the current value, the better the processability.

Corrosion resistance: The coated sheet was cut into a size of 150 mm x 70 mm, and a cross-shaped cut that reached the substrate was made on the coating film with a knife. Then, the coated sheet was subjected to a 3-week salt spray test. The coated sheet after the test was visually evaluated according to the following criteria.
A: The width of the rusted portion on each side of the cut was less than 2 mm.
B: The width of the rusted portion on each side of the cut was 2 mm or more and less than 5 mm.
C: The width of the rusted portion on each side of the cut was 5 mm or more.

Acid resistance: The coated sheet, with its back face and cut faces sealed, was dipped in a 10% aqueous hydrochloric acid solution at 20°C for 1 week. The coated surface was visually evaluated according to the following criteria.
A: No abnormalities.
B: Slight blushing.
C: Serious blushing.

Alkali resistance: The coated sheet, with its back face and cut faces sealed, was dipped in a 10% aqueous sodium hydroxide solution at 20°C for 1 week. The coated surface was visually evaluated according to the following criteria.
A: No abnormalities.
B: Slight blushing.
C: Serious blushing.

Bisphenol A concentration: The aqueous coating composition obtained in each Example was dissolved in tetrahydrofuran and analyzed by high performance liquid chromatograph to measure the bisphenol A concentration.

Table 1 shows the test results.

**Table 1**

| | Example | | | | | Comp. Ex. | |
|---|---|---|---|---|---|---|---|
| | 1 | 2 | 3 | 4 | 5 | 1 | 2 |
| Gel fraction | 90.5 | 92.0 | 93.5 | 94.0 | 94.0 | 92.4 | 90.8 |
| Substrate adhesion (kg/5 mm) | 2.45 | 2.40 | 3.00 | 2.45 | 3.00 | 3.65 | 3.60 |
| Processability (mA) | 0.54 | 0.03 | 0.61 | 0.02 | 0.82 | 0.43 | 0.38 |
| Corrosion resistance | A | A | A | A | A | A | A |
| Acid resistance | A | A | A | A | A | A | A |
| Alkali resistance | A | A | A | A | A | A | A |
| Bisphenol A concentration (ppm) | Not detected | | | | | 40 | 2,000 |

The aqueous coating composition for the inner surface of a can according to the present invention does not contain free bisphenol A, since it is prepared by using, as the starting material epoxy resin, a high-molecular-weight epoxy resin that is a reaction product of a low-molecular-weight cresol novolac epoxy resin (a) with a low-molecular-weight cresol novolac phenol resin (b). Therefore, the coating composition is free of the environmental hormone problem caused by bisphenol A.

Moreover, the coating composition has high application workability and is excellent in film performance characteristics, such as substrate adhesion, processability, corrosion resistance, acid resistance, alkali resistance, hygiene, and flavor retention, and thus can be suitably used for coating the inner surface of cans, such as cans for drinks, meat, vegetables, fruits, and other foods.

The coating composition is also excellent in can production efficiency.

## Claims

1. An aqueous coating composition for the inner surface of a can, comprising a carboxyl-containing, acrylic-modified epoxy resin (C) obtainable by reacting a high-molecular-weight epoxy resin (A) that has a number average molecular weight of 3,000 to 30,000 and is a reaction product of a low-molecular-weight cresol novolac epoxy resin (a) comprising 70 wt.% or more of the compound of formula (1) and a low-molecular-weight cresol novolac phenol resin (b) comprising 75 wt.% or more of the compound of formula (2), with a carboxyl-containing acrylic resin (B); the carboxyl-containing, acrylic-modified epoxy resin (C) being neutralized and dispersed in an aqueous medium.

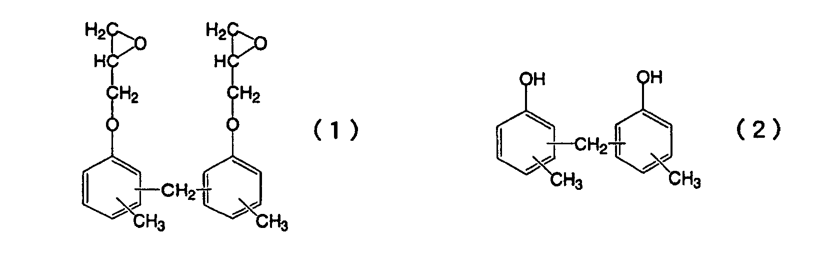

2. The aqueous coating composition according to claim 1, wherein the compound of formula (1) comprises 70 wt.% or more of the compound of formula (3), and the compound of formula (2) comprises 70 wt.% or more of the compound of formula (4).

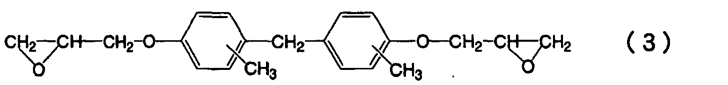

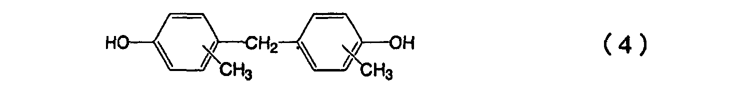

3. The aqueous coating composition according to claim 1 or 2, wherein the low-molecular-weight cresol novolac epoxy resin (a) is a low-molecular-weight orthocresol novolac epoxy resin, and the low-molecular-weight cresol novolac phenol resin (b) is a low-molecular-weight orthocresol novolac phenol resin.

4. The aqueous coating composition according to any one of claims 1 to 3, wherein the carboxyl-containing acrylic resin (B) has an acid value of 100 to 500 mg KOH/g.

5. The aqueous coating composition according to any one of claims 1 to 4, wherein the carboxyl-containing, acrylic-modified epoxy resin (C) is obtained by reacting the high-molecular-weight epoxy resin (A) with the carboxyl-containing acrylic resin (B) at an (A)/(B) weight ratio of 60/40 to 90/10 on a solids basis.

6. The aqueous coating composition according to any one of claims 1 to 5, wherein the carboxyl-containing, acrylic-modified epoxy resin (C) has an acid value of 15 to 200 mg KOH/g.

7. The aqueous coating composition according to any one of claims 1 to 6, further comprising 20 parts by weight or less of a resol phenol resin crosslinking agent per 100 parts by weight of the carboxyl-containing, acrylic-modified epoxy resin (C).
